# EUROPÄISCHE PATENTSCHRIFT

(11) **EP 0 732 530 B1**
(45) Veröffentlichungstag und Bekanntmachung des Hinweises auf die Patenterteilung: **03.05.2000**
(21) Anmeldenummer: 96101125.1
(22) Anmeldetag: 26.01.1996
(51) Int. Cl.: F16K 24/04

(54) **Vorrichtung zum Entlüften von Leitungssystemen**
Venting device for pipe systems
Dispositif pour la désaération de systèmes de conduits

(30) Priorität: 17.03.1995 DE 19509875
(43) Veröffentlichungstag der Anmeldung: 18.09.1996
(73) Patentinhaber: Gebr. Tuxhorn GmbH & Co. KG, 33647 Bielefeld (DE)
(72) Erfinder: Imrecke, Peter, D-33619 Bielefeld (DE); Franke, Wilhelm J., D-33334 Gütersloh (DE)
(74) Vertreter: Laufhütte, Dieter, Dr.-Ing.

(56) Entgegenhaltungen:
- EP-A- 0 133 992
- DE-A- 3 207 321
- DE-B- 1 032 051
- FR-A- 719 776
- FR-A- 2 043 048
- US-A- 2 913 068
- US-A- 3 424 184
- US-A- 3 437 104

## Beschreibung

Die Erfindung betrifft eine Vorrichtung zum Entlüften von Leitungssystemen mit geschlossenem Wasserkreislauf mit einem zweigeteilten Gehäuse, an dessen unterem Teil ein damit einstückig ausgebildetes Verbindungsstück zum Anschluß an den Wasserkreislauf vorgesehen und an dessen oberen Ende ein Ventil mit einem in das Gehäuse in etwa horizontaler Richtung hineinragenden Betätigungsstift angeordnet ist, an dessen freiem Ende ein in vertikaler Richtung beweglicher Schwimmer über eine Kette angehängt ist, wobei die axiale Länge des Gehäuses so groß ist, daß bei dem höchsten auftretenden Wasserdruck sich das Ventil in dem Luftraum oberhalb des Wasserspiegels befindet.

Vorrichtungen dieser Art dienen dazu, beim Füllen und Entleeren der Leitungssysteme und auch bei thermisch bedingten Änderungen des Füllvolumens den notwendigen Luftaustausch zwischen der in den Leitungssystemen enthaltenen Luft und der Außenluft zuzulassen. Dieser notwendige Luftaustausch wird dadurch erreicht, daß der Schwimmer des Ventil etwa immer dann öffnet, wenn das Wasser in dem Wasserkreislauf unter ein vorbestimmtes Niveau in dem Gehäuse sinkt, was beispielsweise auch dann der Fall ist, wenn sich der Luftraum in dem Gehäuse durch Ansammlung von Luft oder Gasen aus dem System vergrößert.

Aus der DE 32 07 321 C2 ist bereits eine derartige (oberbegriffsmäßige) Vorrichtung bekannt, die einen topfförmigen, etwa zylinderförmigen unteren Gehäuseteil aufweist, dessen Boden mit einem einen Außengewinde aufweisenden Anschlußstutzen zur senkrechten Montage auf einem Leitungssystem versehen ist. Soll eine derartige Vorrichtung im Eckbereich eines Leitungssystems angeordnet werden, so ergibt sich eine komplizierte Montage. Hierzu muß in der Regel in dem Eckbereich der Leitung ein Anschlußstück eingeschweißt werden, mit dem dann der Anschlußstutzen der Entlüftungsvorrichtung verschraubt wird.

Aufgabe der Erfindung ist es, die gattungsgemäße Vorrichtung derart weiterzubilden, daß diese vergleichsweise einfacher im Eckbereich einer Rohrleitung montierbar ist.

Erfindungsgemäß wird diese Aufgabe ausgehend von einer gattungsgemäßen Entlüftungsvorrichtung durch die Merkmale des kennzeichnenden Teils des Anspruchs 1 gelöst. Demnach weist das Verbindungsstück zwei Anschlüsse auf. Dabei ist ein Anschluß derart ausgerichtet, daß seine Symmetrieachse mit der Gehäusesymmetrieachse fluchtet. Der andere Anschluß steht mit seiner Symmetrieachse im rechten Winkel auf der Gehäusesymmetrieachse. Durch die erfindungsgemäße Lösung wird eine Kombination eines an sich bekannten Entlüfters mit einem Umlenkabscheider geschaffen. Durch den Umlenkabscheider wird der Abscheidegrad der Luftblasen durch die 90° Umlenkung wesentlich verbessert. Diese abgeschiedenen Luftblasen steigen senkrecht nach oben und sammeln sich im unteren Gehäuseteil der Entlüftungsvorrichtung. Aufgrund dieser kombinatorischen Wirkung ist die Effizienz der Entlüftungsvorrichtung entscheidend verbessert.

Aus den sich an den Hauptanspruch anschließenden Unteransprüchen gehen bevorzugte Ausgestaltungen der Erfindung hervor, wodurch die Entlüftungsvorrichtung in einfacher Art und Weise mit einem Rohrsystem im Eckbereich verbunden werden kann.

Durch eine derartige Anordnung wird nicht nur der Einbau der Entlüftungsvorrichtung verbessert, sondern auch seine Gesamtfunktion. Durch die geometrische Anordnung der Anschlüsse und das unmittelbar anschließende untere Gehäuseteil der Entlüftungsvorrichtung ist es gewährleistet, daß keine wesentlichen Querschnittsreduzierungen vorliegen. Dadurch, daß das Wasser im Eckbereich umgelenkt wird, wird der Abscheidegrad von im Wasser befindlichen Blasen weiter erhöht. Die abgeschiedenen Wasserblasen gelangen unmittelbar in den unteren Teil des zweigeteilten Gehäuses.

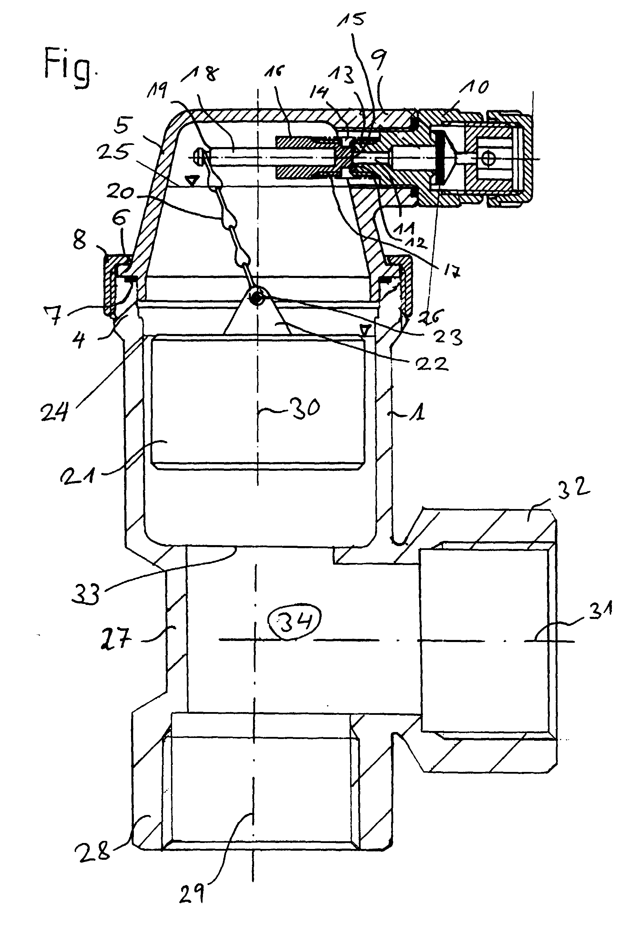

Weitere Einzelheiten und Vorteile der Erfindung ergeben sich aus einem in der Zeichnung dargestellten Ausführungsbeispiel. Die einzige Figur zeigt einen Längsschnitt durch die Entlüftungsvorrichtung.

Die Entlüftungsvorrichtung besteht aus einem topfförmigen, etwa zylinderförmigen unteren Gehäuseteil 1. Auf den oberen verbreiterten Rand 4 des unteren Gehäuseteils 1 ist ein oberes Gehäuseteil 5 aufgesetzt, das sich nach oben hin konusförmig verjüngt und dessen unterer Flansch 6 unter Zwischenlage eines Dichtungsrings 7 durch eine Überwurfmutter 8 mit dem Rand 4 verschraubt ist.

In seinem oberen Bereich ist der obere Gehäuseteil 5, der die Form eines kastenförmigen Deckels aufweist, mit einem radial verlaufenden stutzenförmigen Rohrstück 9 einstückig verbunden, in das ein Ventilkörper 10 mit einer axialen Durchgangsbohrung 11 eingeschraubt ist. Der Ventilkörper 10 weist einen inneren Teil 13 mit verringertem Durchmesser auf, der an seiner Stirnseite mit einem ringförmigen, die Durchgangsbohrung 11 umgebenden Ventilsitz 12 versehen ist. Durch eine Feder 14 ist eine Dichtfläche 15 eines Dichtstücks 16 in dichtender Anlage an dem Ventilsitz 12 gehalten. Das Dichtstück 16 ist fluchtend mit dem Teil 13 mit einem Teil 17 gleichen Durchmessers versehen. Die Teile 13 und 17 sind mit Gewinden versehen, auf die die Enden der Schraubenfeder 14 in der Weise festgelegt sind, daß diese die Dichtfläche 15 in Anlage an den Ventilsitz 12 hält. Das Dichtstück 16 ist mit einem zentralen Sackloch versehen, in dem ein Betätigungsstift 18 gehalten ist.

Der Betätigungsstift 18 weist an seinem Ende eine Ringnut 19 auf, in die ein Ende einer Kette 20 eingehängt ist, deren anderes Ende mit einem Schwimmer 21 verbunden ist. Zur Befestigung der Kette 20 ist der Schwimmer an seiner Oberseite mit zwei parallel zueinander stehenden Lageraugen 22 versehen, die durch einen Bolzen 23 miteinander verbunden sind, so daß eine Öse geschaffen ist, in die das untere Ende der Kette 20 eingehängt ist.

In der in der Zeichnung dargestellten Stellung befindet sich der Schwimmer 21 in einer Höhe, die dem Wasserstand 24 im drucklosen Zustand entspricht und in der die Kette 20 gerade gespannt ist. Bei einem tieferen Wasserstand oder bei einem weiteren Absinken des Wasserstandes würde der Schwimmer 21 über die Kette 20 den Betätigungsstift 18 verschwenken, so daß durch Kippen des Dichtstücks 16 dessen Dichtfläche 15 teilweise von dem Ventilsitz 12 abheben würde.

Bei höchstem Druck steigt der Wasserpegel bis zu der Linie 25 in dem oberen Gehäuseteil 5 an, in dem er immer noch unter der Ventileinrichtung liegt.

Um zu verhindern, daß bei einem Absinken des Wasserspiegels in unerwünschter Weise Luft eindringt, ist der Ventilkörper 10 zusätzlich mit einer eine Membran 26 enthaltenden Rückschlagventil versehen.

Das untere Gehäuseteil 1 ist zusammen mit einem Verbindungsstück 27 zum Anschluß an den Wasserkreislauf einstückig ausgebildet. Das Verbindungsstück 27 weist einen Anschluß 28 auf, dessen Symmetrieachse 29 mit der Symmetrieachse 30 des Gehäuses 1,5 fluchtet. Zum anderen ist ein Anschluß 32 vorgesehen, dessen Symmetrieachse 31 senkrecht auf der Symmetrieachse 30 des Gehäuses 1,5 steht. Aufgrund der Integration des Verbindungsstückes 27 mit dem unteren Teil des Gehäuses 1 kann die Gesamtbauhöhe der Entlüftungsvorrichtung gegenüber dem Stand der Technik verringert werden, da hier keine zusätzlichen Bauteile wie z.B. Schweißbogen, Steigrohr und Muffe mehr benötigt werden. Der große Eintrittsquerschnitt 33 am Übergang zu dem unteren Gehäuseteil 1 begünstigt den guten Luft-Wasseraustausch und ermöglicht daher eine optimale Entlüftungsleistung. Im Winkelbereich, der in der Figur mit 34 bezeichnet wurde, erfolgt eine Querschnittsvergrößerung, wodurch eine Geschwindigkeitsreduzierung des Heizwassers im Entlüftungsgehäuse gegenüber der Rohrleitung bewirkt wird. Auch hierdurch wird die Luftabscheidewirkung verbessert. Im übrigen wird durch die Umlenkung des Wassers die Luftabscheidewirkung günstig beeinflußt. In dem hier dargestellten Ausführungsbeispiel sind die Anschlüsse 28 und 32 jeweils mit Innengewinden versehen.

## Patentansprüche

1. Vorrichtung zum Entlüften von Leitungssystemen mit geschlossenem Wasserkreislauf mit einem zweigeteilten Gehäuse, an dessen unterem Gehäuseteil (1) ein damit einstückig ausgebildetes Verbindungsstück (27) zum Anschluß an den Wasserkreislauf vorgesehen ist, und an dessen oberen Ende ein Ventil (10) mit einem in das Gehäuse in etwa horizontaler Richtung hineinragenden Betätigungsstift (18) angeordnet ist, an dessen freiem Ende ein in vertikaler Richtung beweglicher Schwimmer (21) über eine Kette (20) angehängt ist, wobei die axiale Länge des Gehäuses so groß ist, daß bei dem höchsten auftretenden Wasserdruck sich das Ventil in dem Luftraum oberhalb des Wasserspiegels befindet,
**dadurch gekennzeichnet,**
daß das Verbindungsstück (27) einen Anschluß (28) mit Gewinde, Klemmfitting-System oder Verschraubung aufweist, dessen Symmetrieachse (29) mit der Gehäusesymmetrieachse (30) fluchtet, und einen Anschluß (32) mit Gewinde, Klemmfitting-System oder Verschraubung aufweist, dessen Symmetrieachse im rechten Winkel auf der Gehäusesymmetrieachse (30) steht.

2. Vorrichtung nach Anspruch 1, dadurch gekennzeichnet, daß beide Anschlüsse ein Innengewinde aufweisen.

3. Vorrichtung nach Anspruch 1, dadurch gekennzeichnet, daß beide Anschlüsse Teile eines Klemmfitting-Systems sind.

4. Vorrichtung nach Anspruch 1, dadurch gekennzeichnet, daß beide Anschlüsse Verschraubungen aufweisen.

5. Vorrichtung nach Anspruch 1, dadurch gekennzeichnet, daß der Eingang ein Innengewinde und der Ausgang eine Verschraubung aufweist.

## Claims

1. A venting device for pipe systems having a closed water circulation with a bipartite housing at whose lower housing part (1) a connection piece (27) formed integrally therewith is provided for connection to the water circulation and at whose upper end a valve (10) is disposed having an actuating pin (18) extending into the housing in a roughly horizontal direction, at the free end of which actuating pin a float (21) moving in a vertical direction is hung by means of a chain (20), with the axial length of the housing being so large that at the maximum water pressure occurring the valve is located in the air space above the water level,
**characterised in that**
the connection piece (27) possesses a connection (28) possessing a thread, clamp fitting system or threaded joint, the symmetrical axis (29) of which connection is aligned with the symmetrical axis (30) of the housing and possesses a connection (32) having a thread, clamp fitting system or threaded joint, the symmetrical axis of which connection is at a right angle to the symmetrical axis (30) of the housing.

2. A device in accordance with claim 1, wherein both connections possess an inside thread.

3. A device in accordance with claim 1, wherein both connections are part of a clamp fitting system.

4. A device in accordance with claim 1, wherein both connections possess threaded joints.

5. A device in accordance with claim 1, wherein the inlet possesses an inside thread and the outlet a threaded joint.

## Revendications

1. Dispositif pour la désaération de systèmes de conduits avec un circuit d'eau fermé avec un boîtier en deux parties, à la partie de boîtier inférieure (1) duquel est prévue une pièce de liaison (27) réalisée en une pièce avec celle-ci pour le raccordement au circuit d'eau et à l'extrémité supérieure duquel est disposée une vanne (10) avec une goupille d'actionnement (18) faisant saillie dans le boîtier à peu près dans la direction horizontale, à l'extrémité libre duquel est accroché par une chaîne (20) un flotteur (21) déplaçable dans la direction verticale, où la longueur axiale du boîtier est suffisamment grande pour que, lors de la plus grande pression d'eau produite, la vanne se trouve dans l'espace d'air au-dessus du niveau d'eau, caractérisé en ce que la pièce de liaison (27) présente un raccord (28) avec un filetage, un système d'adaptation par serrage ou un vissage dont l'axe de symétrie (29) est aligné avec l'axe de symétrie de boîtier (30) et présente un raccord (32) avec un filetage, un système d'adaptation par serrage ou un vissage, dont l'axe de symétrie s'étend perpendiculairement à l'axe de symétrie de boîtier (30).

2. Dispositif selon la revendication 1, caractérisé en ce que les deux raccords présentent un filetage intérieur.

3. Dispositif selon la revendication 1, caractérisé en ce que les deux raccords constituent des parties d'un système d'adaptation par serrage.

4. Dispositif selon la revendication 1, caractérisé en ce que les deux raccords présentent des vissages.

5. Dispositif selon la revendication 1, caractérisé en ce que l'entrée présente un filetage intérieur et la sortie un vissage.
